# EUROPÄISCHE PATENTSCHRIFT

(11) **EP 1 575 869 B1**
(45) Veröffentlichungstag und Bekanntmachung des Hinweises auf die Patenterteilung: **07.01.2015**
(21) Anmeldenummer: 03772324.4
(22) Anmeldetag: 11.11.2003
(51) Int. Cl.: C04B 22/14, C04B 22/08, C04B 28/02, C04B 103/12, C04B 103/14

(54) **ERSTARRUNGS- UND ERHÄRTUNGSBESCHLEUNIGER FÜR HYDRAULISCHE BINDEMITTEL SOWIE VERFAHREN ZU DESSEN HERSTELLUNG**
SOLIDIFICATION AND HARDENING ACCELERATOR FOR HYDRAULIC BINDING AGENTS AND METHOD FOR THE PRODUCTION THEREOF
ACCELERATEUR DE SOLIDIFICATION ET DE DURCISSEMENT POUR DES LIANTS HYDRAULIQUES ET PROCEDE POUR SA PRODUCTION

(30) Priorität: 19.11.2002 EP 02025871
(43) Veröffentlichungstag der Anmeldung: 21.09.2005
(73) Patentinhaber: Sika Technology AG, 6340 Baar (CH)
(72) Erfinder: SOMMER, Marcel, CH-8422 Pfungen (CH); MÄDER, Urs, CH-8500 Frauenfeld (CH); WOMBACHER, Franz, CH-8916 Jonen (CH); LINDLAR, Benedikt, 78467 Konstanz (CH)
(74) Vertreter: Isler, Jörg
(86) Internationale Anmeldenummer: PCT/EP2003/012579
(87) Internationale Veröffentlichungsnummer: WO 2004/046059

(56) Entgegenhaltungen:
- EP-A- 1 167 315
- WO-A-00/78688
- WO-A-01/42165
- WO-A-96/05150
- WO-A-03/029163
- FR-A- 2 800 062
- PATENT ABSTRACTS OF JAPAN Bd. 0132, Nr. 60 (C-607), 15. Juni 1989 (1989-06-15) & JP 1 061339 A (DENKI KAGAKU KOGYO KK), 8. März 1989 (1989-03-08)

## Beschreibung

### Technisches Gebiet

Die Erfindung geht aus von einem Erstarrungs- und Erhärtungsbeschleuniger für hydraulische Bindemittel nach dem Oberbegriff des ersten Anspruches.

Die Erfindung geht ebenfalls aus von einem Verfahren zur Herstellung eines Erstarrungs- und Erhärtungsbeschleuniger für hydraulische Bindemittel nach dem Oberbegriff des unabhängigen Verfahrensanspruches.

### Stand der Technik

Es sind viele Substanzen bekannt, welche das Abbinden und Erhärten von Beton beschleunigen. Gebräuchlich sind beispielsweise stark alkalisch reagierende Stoffe wie Alkalihydroxide, Alkalicarbonate, Alkalisilikate, Alkalialuminate und Erdalkalichloride. Bei den stark alkalisch reagierenden Stoffen können jedoch unerwünschte Belästigungen des Verarbeiters, wie Verätzungen, auftreten und sie reduzieren die Endfestigkeit und die Dauerhaftigkeit des Betons.

Aus der EP 0 076 927 B1 sind alkalifreie Abbindebeschleuniger für hydraulische Bindemittel bekannt, welche diese Nachteile vermeiden sollen. Zur Beschleunigung des Abbindens und Erhärtens eines hydraulischen Bindemittels, wie Zement, Kalk, hydraulischer Kalk und Gips sowie daraus hergestelltem Mörtel und Beton, werden dem Gemisch, welches das genannte Bindemittel enthält, von 0.5 bis 10 Gew.%, bezogen auf das Gewicht dieses Bindemittels, eines alkalifreien Abbinde- und Erhärtungsbeschleuniger zugegeben, wobei dieser Beschleuniger Aluminiumhydroxid enthält.

Solche Mörtel und Betone sind durch das beschleunigte Abbinden und Erhärten besonders gut geeignet als Spritzmörtel und -beton.

Aus der EP 0 946 451 B1 sind Erstarrungs- und Erhärtungsbeschleuniger in gelöster Form für hydraulische Bindemittel bekannt, welche beim Spritzen des Betons leichter dem Beton zugemischt werden können. Ein solcher Erstarrungs- und Erhärtungsbeschleuniger besteht unter anderem aus Aluminiumhydroxid, Aluminiumsalzen und organischen Karbonsäuren. Nachteil solcher Erstarrungs- und Erhärtungsbeschleuniger ist jedoch die Stabilität der Lösung.

### Darstellung der Erfindung

Der Erfindung liegt die Aufgabe zugrunde, bei einem Erstarrungs- und Erhärtungsbeschleuniger für hydraulische Bindemittel der eingangs genannten Art eine möglichst hohe Beschleunigungswirkung bei möglichst langer Lebensdauer des Beschleunigers zu erzielen.

Erfindungsgemäss wird dies durch die Merkmale des ersten Anspruches erreicht.

Die Vorteile der Erfindung sind unter anderem darin zu sehen, dass durch die erfindungsgemässen Beschleuniger eine hohe Stabilität, d.h. Stabilisierung der Beschleuniger-Lösung erzielt wird und dass eine hohe Beschleunigung für das Abbinden und Erhärten von hydraulischen Bindemitteln erzielt wird.

Hydraulische Bindemittel mit Zusatz des erfindungsgemässen Beschleunigers können aufgrund ihres beschleunigten Erstarrungs- und Erhärtungsverhaltens vorteilhafterweise durch Spritzen verarbeitet werden.

Weitere vorteilhafte Ausgestaltungen der Erfindung ergeben sich aus den Unteransprüchen.

### Weg zur Ausführung der Erfindung

Ein erfindungsgemässer Erstarrungs- und Erhärtungsbeschleuniger für hydraulische Bindemittel umfasst:
Al₂(SO₄)₃ Aluminiumsulfat, Al(OH)₃ Aluminiumhydroxid und Mineralsäure in wässriger Lösung, wobei der Mineralsäureanteil (in Gew.-%) 1-5% H₃PO₄ Phosphorsäure und/oder 0.5-3.0% H₃BO₃ Borsäure umfasst.

Ein solcher erfindungsgemässer Erstarrungs- und Erhärtungsbeschleuniger besteht vorteilhafterweise im wesentlichen aus (in Gew.-%):
- 10 - 50% Al₂(SO₄)₃ Aluminiumsulfat,
- 5 - 30% Al(OH)₃ Aluminiumhydroxid,
- 0.5 - 10% Mineralsäure,
- 0 - 10% Alkanolamin,
- 0 - 5.0% Fliessmittel,
- 0 - 20% Stabilisator,
in wässriger Lösung.

Als Alkanolamin wird vorteilhafterweise Diethanolamin verwendet.

Als Fliessmittel wird vorteilhafterweise Polycarboxylate und besonders vorteilhaft Sika ViscoCrete®, insbesondere Sika ViscoCrete® 20HE, verwendet.

Als Stabilisator wird vorteilhafterweise Silicasol verwendet.

Besonders vorteilhafte Erstarrungs- und.Erhärtungsbeschleuniger bestehen im wesentlichen aus (in Gew.-%):
- 30 - 50% Al₂(SO₄)₃ Aluminiumsulfat, insbesondere 40 - 45%, und / oder
- 5 - 20% Al(OH)₃ Aluminiumhydroxid, insbesondere 10 - 17%, und / oder
- 0.5 - 8% Mineralsäure und / oder
- 0 - 5% Alkanolamin und / oder
- 0.1 - 3.0% Fliessmittel, insbesondere 0.1 bis 1.0 % und / oder
- 0-10% Stabilisator.

Es wurden mehrere Proben eines erfindungsgemässen Beschleunigers in den oben angegeben Bereichen hergestellt. Die Zusammensetzung dieser Proben ist in den folgenden Beispielen angegeben.

### Beispiel 1:

7.60 kg Aluminiumhydroxid Al(OH)₃ wird einer Lösung von 22.50 kg Aluminiumsulfat mit Kristallwasser Al₂(SO₄)₃ x 14 H₂O in 17.06 kg Wasser H₂O bei 70 - 80°C zugegeben. Nachfolgend wird der so erhaltenen Lösung 1.14 kg einer Phosphorsäurelösung H₃PO₄ (75%), 2 kg eines Silicasols (10% Feststoffgehalt) und 1.70 kg eines Korrosionsinhibitors, einer 90% Lösung von Diethanolamin, zugegeben und diese Mischung eine halbe Stunde gerührt.

Die Stabilität dieser Mischung betrug mindestens 70 Tage.

### Beispiel 2:

7.60 kg Aluminiumhydroxid Al(OH)₃ wird einer Lösung von 22.50 kg Aluminiumsulfat mit Kristallwasser Al₂(SO₄)₃ x 14 H₂O in 14.86 kg Wasser H₂O bei 70 - 80°C zugegeben. Nachfolgend werden der erhaltenen Lösung 2.84 kg einer Phosphorsäurelösung H₃PO₄ (75%), 0.50 kg Polycarboxylate, z.B. Sika ViscoCrete® 20HE welches ein Hochleistungsverflüssiger darstellt, und 1.70 kg eines Korrosionsinhibitors, einer 90% Lösung von Diethanolamin, zugegeben und diese Mischung eine halbe Stunde gerührt.

Die Stabilität dieser Mischung betrug mindestens 70 Tage.

### Beispiel 3:

8.00 kg Aluminiumhydroxid Al(OH)₃ wird einer Lösung von 22.50 kg Aluminiumsulfat mit Kristallwasser Al₂(SO₄)₃ x 14 H₂O in 16.56 kg Wasser H₂O bei 70 - 80°C zugegeben. Nachfolgend werden der erhaltenen Lösung 1.14 kg einer Phosphorsäurelösung H₃PO₄ (75%), 0.10kg Borsäure H₃BO₃ und 1.70 kg eines Korrosionsinhibitors, einer 90% Lösung von Diethanolamin zugegeben und diese Mischung eine halbe Stunde gerührt.

Die Stabilität dieser Mischung betrug mindestens 70 Tage.

### Beispiel 4:

8.10 kg Aluminiumhydroxid Al(OH)₃ wird einer Lösung von 20.60 kg Aluminiumsulfat mit Kristallwasser Al₂(SO₄)₃ x 14 H₂O in 21.00 kg Wasser H₂O bei 70 - 80°C zugegeben. Nachfolgend wird der so erhaltenen Lösung 0.30 kg einer Borsäure H₃BO₃ zugegeben und diese Mischung eine halbe Stunde gerührt.

Die Stabilität dieser Mischung betrug mindestens 70 Tage.

### Beispiel 5:

8.00 kg Aluminiumhydroxid Al(OH)₃ wird einer Lösung von 21.00 kg Aluminiumsulfat mit Kristallwasser Al₂(SO₄)₃ x 14 H₂O in 20.00 kg Wasser H₂O bei 70 - 80°C zugegeben. Nachfolgend werden der erhaltenen Lösung 1.00 kg einer Borsäure H₃BO₃ und 0.50 kg Polycarboxylate, z.B. Sika ViscoCrete® 20HE welches ein Hochleistungsverflüssiger darstellt, zugegeben und diese Mischung eine halbe Stunde gerührt.

Die Stabilität dieser Mischung betrug mindestens 70 Tage.

Dem hydraulischen Bindemittel können 0.1 bis 10 Gew.-% des erfindungsgemässen Beschleunigers zugegeben werden.

Zur Bestimmung der Wirksamkeit des erfindungsgemässen Beschleunigers nach den Beispielen 1 bis 5 wurde Portlandzement jeweils 6% des Beschleunigers nach den oben genannten Beispielen zugemischt und Penetrometerwerte ermittelt. In der folgenden Tabelle sind die Penetrometerwerte mit der jeweilige Zeitdauer, bis eine Festigkeit von 200g, 600g und 2200g erreicht wird angegeben. Diese Penetrometerwerte wurden mit einer Nadel mit 3mm Durchmesser und mit einem Prüfgerät von RMU ermittelt.

Als Vergleich wurde eine Probe aus Portlandzement ohne Beschleuniger verwendet und die Penetrometerwerte für die gleiche Probenzusammensetzung wenn der Beschleuniger ersatzlos gestrichen wurde respektive wenn der Beschleuniger durch eine entsprechende Menge Wasser ersetzt wurde ermittelt.

| Penetrometerwert bei | 200g | 600g | 2200g |
|---|---|---|---|
| Beispiel 1 | 5 min | 7 min | 15 min |
| Beispiel 2 | 6 min | 8 min | 16 min |
| Beispiel 3 | 6 min | 9 min | 20 min |
| Beispiel 4 | 7 min | 14 min | 40 min |
| Beispiel 5 | 12 min | 20 min | 55 min |
| Probe ohne Beschleuniger | 450 min | 485 min | 540 min |
| Probe ohne Beschleuniger mit Anteil Wasser | 490 min | 522 min | 579 min |

Die nach den Beispielen 1 bis 5 hergestellten Beschleuniger ergaben somit Lösungen, die genügende Beschleunigswerte aufweisen und für eine genügend lange Zeitdauer stabil bleiben.

Die erfindungsgemässen Beschleuniger können auch für andere hydraulische Bindemittel als Zement wie Mischzemente, Kalk, hydraulischer Kalk und Gips und daraus hergestelltem Mörtel und Beton verwendet werden.

Selbstverständlich ist die Erfindung nicht auf das gezeigte und beschriebene Ausführungsbeispiel beschränkt. Die in wässriger Lösung vorliegenden Beschleuniger können auch getrocknet, z.B. durch ein allgemein bekanntes Sprühtrockenverfahren, verwendet werden. Das so erhaltene getrocknete Pulver, welches leicht in Wasser löslich ist, wird vor der Verwendung in Wasser aufgelöst und dann wie der flüssige Beschleuniger verwendet. Die nach den Beispielen 1 bis 5 hergestellten Proben können auch in einem Temperaturbereich von Raumtemperatur RT bis 90°C hergestellt werden, vorzugsweise jedoch in einem Bereich von 50 bis 80°C.

## Patentansprüche (Patentansprüche für folgende(n) Vertragsstaat(en): AT, BE, BG, CH, CY, CZ, DE, DK, EE, ES, FI, FR, GB, GR, IE, IT, LI, LU, MC, NL, PT, SE, SK, TR)

1. Erstarrungs- und Erhärtungsbeschleuniger für hydraulische Bindemittel,
umfassend Al₂(SO₄)₃Aluminiumsulfat, Al(OH)₃Aluminiumhydroxid und Mineralsäure in wässriger Lösung,
**dadurch gekennzeichnet,**
**dass** der Mineralsäureanteil (in Gew.-%) 1 - 5% H₃PO₄ Phosphorsäure und / oder 0.5 - 3.0% H₃BO₃ Borsäure umfasst und
der Erstarrungs- und Erhärtungsbeschleuniger keinen Ameisensäureanteil von 0.5 -15 Gew.% enthält.

2. Erstarrungs- und Erhärtungsbeschleuniger nach Anspruch 1,
**dadurch gekennzeichnet**, (in Gew.-%),
dass der Aluminiumsulfatanteil 10 - 50% und / oder der Aluminiumhydroxidanteil 5 - 30% umfasst.

3. Erstarrungs- und Erhärtungsbeschleuniger nach Anspruch 1 oder 2,
**dadurch gekennzeichnet**, (in Gew.-%),
dass der Aluminiumsulfatanteil 30 - 50% und / oder der Aluminiumhydroxidanteil 5 - 20% umfasst.

4. Erstarrungs- und Erhärtungsbeschleuniger nach Anspruch 1, 2 oder 3,
**dadurch gekennzeichnet**, (in Gew.-%),
dass der Aluminiumsulfatanteil 40 - 45% und / oder der Aluminiumhydroxidanteil 10 - 17% und / oder der Mineralsäureanteil 0.5 - 8% umfasst.

5. Erstarrungs- und Erhärtungsbeschleuniger nach einem der vorhergehenden Ansprüche,
**dadurch gekennzeichnet,**
**dass** (in Gew.-%) 0 - 10% Alkanolamin und / oder 0 - 5.0% Fliessmittel und / oder 0 - 20% Stabilisator vorliegen.

6. Erstarrungs- und Erhärtungsbeschleuniger nach einem der vorhergehenden Ansprüche,
**dadurch gekennzeichnet,**
**dass** (in Gew.-%) 0 - 5% Alkanolamin und / oder 0 -10% Stabilisator und / oder 0 - 3.0% Fliessmittel vorliegen.

7. Erstarrungs- und Erhärtungsbeschleuniger nach Anspruch 5 oder 6,
**dadurch gekennzeichnet,**
**dass** das Alkanolamin ein Diethanolamin ist.

8. Erstarrungs- und Erhärtungsbeschleuniger nach Anspruch 5 oder 6,
**dadurch gekennzeichnet,**
**dass** der Stabilisator ein Silicasol ist.

9. Erstarrungs- und Erhärtungsbeschleuniger nach Anspruch 5 oder 6,
**dadurch gekennzeichnet,**
**dass** das Fliessmittel ein Polycarboxylate ist.

10. Verfahren zur Herstellung eines Erstarrungs- und Erhärtungsbeschleuniger,
**dadurch gekennzeichnet,**
**dass** ein in wässriger Lösung vorliegender Erstarrungs- und Erhärtungsbeschleuniger nach Anspruch 1 bis 9 getrocknet wird, insbesondere durch ein Sprühtrockenverfahren.

11. Verfahren zur Herstellung eines Erstarrungs- und Erhärtungsbeschleuniger nach Anspruch 10,
**dadurch gekennzeichnet,**
**dass** die erhaltene getrocknete Mischung vor der Zugabe zum hydraulischen Bindemittel in Wasser gelöst wird.

12. Verfahren zur Herstellung eines Erstarrungs- und Erhärtungsbeschleuniger nach einem der Ansprüche 1 bis 9,
**dadurch gekennzeichnet,**
**dass** bei der Herstellung der wässrigen Lösung und der Zugabe der Komponenten bei der Herstellung der Lösung diese in einem Bereich von Raumtemperatur bis 90°C erwärmt wird.

13. Verfahren zur Herstellung eines Erstarrungs- und Erhärtungsbeschleuniger nach Anspruch 12,
**dadurch gekennzeichnet,**
**dass** die Lösung auf 50 - 80°C erwärmt wird.

14. Verfahren zur Beschleunigung des Abbindens und Erhärtens von hydraulischen Bindemitteln sowie daraus hergestelltem Mörtel oder Beton,
**dadurch gekennzeichnet,**
**dass** einem Gemisch, welches hydraulische Bindemittel enthält, einen Erstarrungs- und Erhärtungsbeschleuniger nach den Ansprüchen 1 bis 11 in einer Menge von 0.1 bis 10 Gew.-% bezogen auf das Gewicht des hydraulischen Bindemittels zugegeben wird.

15. Verwendung des Erstarrungs- und Erhärtungsbeschleuniger nach Anspruch 1 bis 11 in einem Spritzbeton oder Spritzmörtel.

## Patentansprüche (Patentansprüche für folgende(n) Vertragsstaat(en): HU, RO, SI)

1. Erstarrungs- und Erhärtungsbeschleuniger für hydraulische Bindemittel, umfassend Al₂(SO₄)₃ Aluminiumsulfat, Al(OH)₃ Aluminiumhydroxid und Mineralsäure in wässriger Lösung,
**dadurch gekennzeichnet,**
**dass** der Mineralsäureanteil (in Gew.-%) 1 - 5% H₃PO₄ Phosphorsäure und / oder 0.5 - 3.0% H₃BO₃ Borsäure umfasst.

2. Erstarrungs- und Erhärtungsbeschleuniger nach Anspruch 1,
**dadurch gekennzeichnet**, (in Gew.-%),
dass der Aluminiumsulfatanteil 10 - 50% und / oder der Aluminiumhydroxidanteil 5 - 30% umfasst.

3. Erstarrungs- und Erhärtungsbeschleuniger nach Anspruch 1 oder 2,
**dadurch gekennzeichnet**, (in Gew.-%),
dass der Aluminiumsulfatanteil 30 - 50% und / oder der Aluminiumhydroxidanteil 5 - 20% umfasst.

4. Erstarrungs- und Erhärtungsbeschleuniger nach Anspruch 1, 2 oder 3,
**dadurch gekennzeichnet**, (in Gew.-%),
dass der Aluminiumsulfatanteil 40 - 45% und / oder der Aluminiumhydroxidanteil 10 - 17% und / oder der Mineralsäureanteil 0.5 - 8% umfasst.

5. Erstarrungs- und Erhärtungsbeschleuniger nach einem der vorhergehenden Ansprüche,
**dadurch gekennzeichnet,**
**dass** (in Gew.-%) 0 - 10% Alkanolamin und / oder 0 - 5.0% Fliessmittel und / oder 0 - 20% Stabilisator vorliegen.

6. Erstarrungs- und Erhärtungsbeschleuniger nach einem der vorhergehenden Ansprüche,
**dadurch gekennzeichnet,**
**dass** (in Gew.-%) 0 - 5% Alkanolamin und / oder 0 - 10% Stabilisator und / oder 0 - 3.0% Fliessmittel vorliegen.

7. Erstarrungs- und Erhärtungsbeschleuniger nach Anspruch 5 oder 6,
**dadurch gekennzeichnet,**
**dass** das Alkanolamin ein Diethanolamin ist.

8. Erstarrungs- und Erhärtungsbeschleuniger nach Anspruch 5 oder 6,
**dadurch gekennzeichnet,**
**dass** der Stabilisator ein Silicasol ist.

9. Erstarrungs- und Erhärtungsbeschleuniger nach Anspruch 5 oder 6,
**dadurch gekennzeichnet,**
**dass** das Fliessmittel ein Polycarboxylate ist.

10. Verfahren zur Herstellung eines Erstarrungs- und Erhärtungsbeschleuniger,
**dadurch gekennzeichnet,**
**dass** ein in wässriger Lösung vorliegender Erstarrungs- und Erhärtungsbeschleuniger nach Anspruch 1 bis 9 getrocknet wird, insbesondere durch ein Sprühtrockenverfahren.

11. Verfahren zur Herstellung eines Erstarrungs- und Erhärtungsbeschleuniger nach Anspruch 10,
**dadurch gekennzeichnet,**
**dass** die erhaltene getrocknete Mischung vor der Zugabe zum hydraulischen Bindemittel in Wasser gelöst wird.

12. Verfahren zur Herstellung eines Erstarrungs- und Erhärtungsbeschleuniger nach einem der Ansprüche 1 bis 9,
**dadurch gekennzeichnet,**
**dass** bei der Herstellung der wässrigen Lösung und der Zugabe der Komponenten bei der Herstellung der Lösung diese in einem Bereich von Raumtemperatur bis 90°C erwärmt wird.

13. Verfahren zur Herstellung eines Erstarrungs- und Erhärtungsbeschleuniger nach Anspruch 12,
**dadurch gekennzeichnet,**
**dass** die Lösung auf 50 - 80°C erwärmt wird.

14. Verfahren zur Beschleunigung des Abbindens und Erhärtens von hydraulischen Bindemitteln sowie daraus hergestelltem Mörtel oder Beton,
**dadurch gekennzeichnet,**
**dass** einem Gemisch, welches hydraulische Bindemittel enthält, einen Erstarrungs- und Erhärtungsbeschleuniger nach den Ansprüchen 1 bis 11 in einer Menge von 0.1 bis 10 Gew.-% bezogen auf das Gewicht des hydraulischen Bindemittels zugegeben wird.

15. Verwendung des Erstarrungs- und Erhärtungsbeschleuniger nach Anspruch 1 bis 11 in einem Spritzbeton oder Spritzmörtel.

## Claims (Claims for the following Contracting State(s): HU, RO, SI)

1. A setting and curing accelerator for hydraulic binders, comprising Al₂(SO₄)₃ aluminum sulfate, Al(OH)₃ aluminum hydroxide and mineral acid in aqueous solution, **characterized in that** (in % by weight) the proportion of mineral acid is 1-5% H₃PO₄ phosphoric acid and/or 0.5-3.0% H₃BO₃ boric acid.

2. The setting and curing accelerator as claimed in claim 1, **characterized in that** (in % by weight) the proportion of aluminum sulfate is 10-50% and/or the proportion of aluminum hydroxide is 5-30%.

3. The setting and curing accelerator as claimed in claim 1 or 2, **characterized in that** (in % by weight) the proportion of aluminum sulfate is 30-50% and/or the proportion of aluminum hydroxide is 5-20%.

4. The setting and curing accelerator as claimed in claim 1, 2 or 3, **characterized in that** (in % by weight) the proportion of aluminum sulfate is 40-45% and/or the proportion of aluminum hydroxide is 10-17% and/or the proportion of mineral acid is 0.5-8%.

5. The setting and curing accelerator as claimed in any of the preceding claims, **characterized in that** (in % by weight) 0-10% alkanolamine and/or 0-5.0% fluidizer and/or 0-20% stabilizer are present.

6. The setting and curing accelerator as claimed in any of the preceding claims, **characterized in that** (in % by weight) 0-5% alkanolamine and/or 0-10% stabilizer and/or 0-3.0% fluidizer are present.

7. The setting and curing accelerator as claimed in claim 5 or 6, **characterized in that** the alkanolamine is a diethanolamine.

8. The setting and curing accelerator as claimed in claim 5 or 6, **characterized in that** the stabilizer is a silica sol.

9. The setting and curing accelerator as claimed in claim 5 or 6, **characterized in that** the fluidizer is a polycarboxylate.

10. A process for producing a setting and curing accelerator, **characterized in that** a setting and curing accelerator that is present in aqueous solution, as claimed in any of claims 1 to 9, is dried, in particular by a spray drying process.

11. The process for producing a setting and curing accelerator as claimed in claim 10, **characterized in that** the dried mixture obtained is dissolved in water before being added to the hydraulic binder.

12. A process for producing a setting and curing accelerator as claimed in any of claims 1 to 9, **characterized in that** in the production of the aqueous solution and the addition of the components in the production of the solution, the solution is heated to a temperature ranging from room temperature to 90°C.

13. The process for producing a setting and curing accelerator as claimed in claim 12, **characterized in that** the solution is heated to 50-80°C.

14. A method for accelerating the setting and curing of hydraulic binders and mortar or concrete produced therefrom, **characterized in that** a setting and curing accelerator as claimed in any of claims 1 to 11 is added in an amount of 0.1 to 10% by weight to a mixture containing hydraulic binders, with the percentages by weight being based on the weight of the hydraulic binder.

15. The use of the setting and curing accelerator as claimed in any of claims 1 to 11 in a spray concrete or spray mortar.

## Claims (Claims for the following Contracting State(s): AT, BE, BG, CH, CY, CZ, DE, DK, EE, ES, FI, FR, GB, GR, IE, IT, LI, LU, MC, NL, PT, SE, SK, TR)

1. A setting and curing accelerator for hydraulic binders, comprising Al₂(SO₄)₃ aluminum sulfate, Al(OH)₃ aluminum hydroxide and mineral acid in aqueous solution, **characterized in that** (in % by weight) the proportion of mineral acid is 1-5% H₃PO₄ phosphoric acid and/or 0.5-3.0% H₃BO₃ boric acid and the setting and curing accelerator does not contain 0.5-15% by weight formic acid.

2. The setting and curing accelerator as claimed in claim 1, **characterized in that** (in % by weight) the proportion of aluminum sulfate is 10-50% and/or the proportion of aluminum hydroxide is 5-30%.

3. The setting and curing accelerator as claimed in claim 1 or 2, **characterized in that** (in % by weight) the proportion of aluminum sulfate is 30-50% and/or the proportion of aluminum hydroxide is 5-20%.

4. The setting and curing accelerator as claimed in claim 1, 2 or 3, **characterized in that** (in % by weight) the proportion of aluminum sulfate is 40-45% and/or the proportion of aluminum hydroxide is 10-17% and/or the proportion of mineral acid is 0.5-8%.

5. The setting and curing accelerator as claimed in any of the preceding claims, **characterized in that** (in % by weight) 0-10% alkanolamine and/or 0-5.0% fluidizer and/or 0-20% stabilizer are present.

6. The setting and curing accelerator as claimed in any of the preceding claims, **characterized in that** (in % by weight) 0-5% alkanolamine and/or 0-10% stabilizer and/or 0-3.0% fluidizer are present.

7. The setting and curing accelerator as claimed in claim 5 or 6, **characterized in that** the alkanolamine is a diethanolamine.

8. The setting and curing accelerator as claimed in claim 5 or 6, **characterized in that** the stabilizer is a silica sol.

9. The setting and curing accelerator as claimed in claim 5 or 6, **characterized in that** the fluidizer is a polycarboxylate.

10. A process for producing a setting and curing accelerator, **characterized in that** a setting and curing accelerator that is present in aqueous solution, as claimed in any of claims 1 to 9, is dried, in particular by a spray drying process.

11. The process for producing a setting and curing accelerator as claimed in claim 10, **characterized in that** the dried mixture obtained is dissolved in water before being added to the hydraulic binder.

12. A process for producing a setting and curing accelerator as claimed in any of claims 1 to 9, **characterized in that** in the production of the aqueous solution and the addition of the components in the production of the solution, the solution is heated to a temperature ranging from room temperature to 90°C.

13. The process for producing a setting and curing accelerator as claimed in claim 12, **characterized in that** the solution is heated to 50-80°C.

14. A method for accelerating the setting and curing of hydraulic binders and mortar or concrete produced therefrom, **characterized in that** a setting and curing accelerator as claimed in any of claims 1 to 11 is added in an amount of 0.1 to 10% by weight to a mixture containing hydraulic binders, with the percentages by weight being based on the weight of the hydraulic binder.

15. The use of the setting and curing accelerator as claimed in any of claims 1 to 11 in a spray concrete or spray mortar.

## Revendications (Revendications pour l'(les) Etat(s) contractant(s) suivant(s): HU, RO, SI)

1. Accélérateur de prise et de durcissement pour des liants hydrauliques, comprenant
du sulfate d'aluminium Al₂(SO₄)₃, de l'hydroxyde d'aluminium Al(OH)₃ et de l'acide minéral dans une solution aqueuse,
**caractérisé en ce que** (en % en poids) la proportion de l'acide minéral est de 1 à 5 % d'acide phosphorique H₃PO₄ et/ou de 0,5 à 3,0 % H₃BO₃ d'acide borique.

2. Accélérateur de prise et de durcissement selon la revendication 1,
**caractérisé en ce que** (en % en poids) la proportion de sulfate d'aluminium est de 10 à 50 % et/ou la proportion d'hydroxyde d'aluminium est de 5 à 30 %.

3. Accélérateur de prise et de durcissement selon la revendication 1 ou 2,
**caractérisé en ce que** (en % en poids) la proportion de sulfate d'aluminium est de 30 à 50 % et/ou la proportion d'hydroxyde d'aluminium est de 5 à 20 %.

4. Accélérateur de prise et de durcissement selon la revendication 1, 2 ou 3,
**caractérisé en ce que** (en % en poids) la proportion de sulfate d'aluminium est de 40 à 45 % et/ou la proportion d'hydroxyde d'aluminium est de 10 à 17% et/ou la proportion d'acide minéral est de 0,5 à 8 %.

5. Accélérateur de prise et de durcissement selon l'une quelconque des revendications,
**caractérisé en ce que** (en % en poids) 0 à 10% d'alcanolamine et/ou 0 à5,0 % d'agent fluidifiant et/ou 0 à 20 % d'agent stabilisateur sont présents.

6. Accélérateur de prise et de durcissement selon l'une quelconque des revendications,
**caractérisé en ce que** (% en poids) 0 à 5% d'alcanolamine et/ou 0 à 10 % d'agent stabilisateur et/ou 0 à3,0 % d'agent fluidifiant sont présents.

7. Accélérateur de prise et de durcissement selon la revendication 5 ou 6,
**caractérisé en ce que** d'alcanolamine est une diéthanolamine.

8. Accélérateur de prise et de durcissement selon la revendication 5 ou 6,
**caractérisé en ce que** l'agent stabilisateur est une silice colloïdale.

9. Accélérateur de prise et de durcissement selon la revendication 5 ou 6,
**caractérisé en ce que** l'agent fluidifiant est un polycarboxylate.

10. Procédé de production d'un accélérateur de prise et de durcissement,
**caractérisé en ce qu'**un accélérateur de prise et de durcissement qui est présent dans une solution aqueuse, selon l'une quelconque des revendications 1 à 9, est séché en particulier par un procédé de séchage par pulvérisation.

11. Procédé de production d'un accélérateur de prise et de durcissement selon la revendication 10,
**caractérisé en ce que** le mélange séché obtenu est dissout dans l'eau avant d'être ajouté au liant hydraulique.

12. Procédé de production d'un accélérateur de prise et de durcissement selon l'une quelconque des revendications 1 à 9,
**caractérisé en ce que** dans la production de la solution aqueuse et l'ajout des éléments dans la production de la solution, la solution est chauffée à une température allant d'une température ambiante jusqu'à 90 °C.

13. Procédé de production d'un accélérateur de prise et de durcissement selon la revendication 12,
**caractérisé en ce que** la solution est chauffée à 50 à 80 °C.

14. Procédé pour accélérer la prise et le durcissement de liants hydrauliques et de mortier ou de béton produit à partir de ceux-ci,
**caractérisé en ce qu'**un accélérateur de prise et de durcissement selon l'une quelconque des revendications 1 à 11 est ajouté dans une quantité de 0,1 à 10 % en poids à un mélange contenant des liants hydrauliques, les pourcentages en poids étant basés sur le poids du liant hydraulique.

15. Utilisation de l'accélérateur de prise et de durcissement selon l'une quelconque des revendications 1 à 11 dans un béton projeté ou un mortier projeté.

## Revendications (Revendications pour l'(les) Etat(s) contractant(s) suivant(s): AT, BE, BG, CH, CY, CZ, DE, DK, EE, ES, FI, FR, GB, GR, IE, IT, LI, LU, MC, NL, PT, SE, SK, TR)

1. Accélérateur de prise et de durcissement pour des liants hydrauliques, comprenant
du sulfate d'aluminium Al₂(SO₄)₃, de l'hydroxyde d'aluminium Al(OH)₃ et de l'acide minéral dans une solution aqueuse,
**caractérisé en ce que** (en % en poids) la proportion de l'acide minéral est de 1 à 5 % d'acide phosphorique H₃PO₄ et/ou de 0,5 à 3,0 % H₃BO₃ d'acide borique et l'accélérateur de prise et de durcissement ne contient pas 0,5 à 15 % en poids d'acide formique.

2. Accélérateur de prise et de durcissement selon la revendication 1,
**caractérisé en ce que** (en % en poids) la proportion de sulfate d'aluminium est de 10 à 50 % et/ou la proportion d'hydroxyde d'aluminium est de 5 à 30 %.

3. Accélérateur de prise et de durcissement selon la revendication 1 ou 2,
**caractérisé en ce que** (en % en poids) la proportion de sulfate d'aluminium est de 30 à 50 % et/ou la proportion d'hydroxyde d'aluminium est de 5 à 20 %.

4. Accélérateur de prise et de durcissement selon la revendication 1, 2 ou 3,
**caractérisé en ce que** (en % en poids) la proportion de sulfate d'aluminium est de 40 à 45 % et/ou la proportion d'hydroxyde d'aluminium est de 10 à 17% et/ou la proportion d'acide minéral est de 0,5 à 8 %.

5. Accélérateur de prise et de durcissement selon l'une quelconque des revendications,
**caractérisé en ce que** (en % en poids) 0 à 10 % d'alcanolamine et/ou 0 à5,0 % d'agent fluidifiant et/ou 0 à 20 % d'agent stabilisateur sont présents.

6. Accélérateur de prise et de durcissement selon l'une quelconque des revendications,
**caractérisé en ce que** (% en poids) 0 à 5 % d'alcanolamine et/ou 0 à 10 % d'agent stabilisateur et/ou 0 à3,0 % d'agent fluidifiant sont présents.

7. Accélérateur de prise et de durcissement selon la revendication 5 ou 6,
**caractérisé en ce que** d'alcanolamine est une diéthanolamine.

8. Accélérateur de prise et de durcissement selon la revendication 5 ou 6,
**caractérisé en ce que** l'agent stabilisateur est une silice colloïdale.

9. Accélérateur de prise et de durcissement selon la revendication 5 ou 6,
**caractérisé en ce que** l'agent fluidifiant est un polycarboxylate.

10. Procédé de production d'un accélérateur de prise et de durcissement,
**caractérisé en ce qu'**un accélérateur de prise et de durcissement qui est présent dans une solution aqueuse, selon l'une quelconque des revendications 1 à 9, est séché en particulier par un procédé de séchage par pulvérisation.

11. Procédé de production d'un accélérateur de prise et de durcissement selon la revendication 10.
**caractérisé en ce que** le mélange séché obtenu est dissout dans l'eau avant d'être ajouté au liant hydraulique.

12. Procédé de production d'un accélérateur de prise et de durcissement selon l'une quelconque des revendications 1 à 9,
**caractérisé en ce que** dans la production de la solution aqueuse et l'ajout des éléments dans la production de la solution, la solution est chauffée à une température allant d'une température ambiante jusqu'à 90 °C.

13. Procédé de production d'un accélérateur de prise et de durcissement selon la revendication 12,
**caractérisé en ce que** la solution est chauffée à 50 à 80 °C.

14. Procédé pour accélérer la prise et le durcissement de liants hydrauliques et de mortier ou de béton produit à partir de ceux-ci,
**caractérisé en ce qu'**un accélérateur de prise et de durcissement selon l'une quelconque des revendications 1 à 11 est ajouté dans une quantité de 0,1 à 10 % en poids à un mélange contenant des liants hydrauliques, les pourcentages en poids étant basés sur le poids du liant hydraulique.

15. Utilisation de l'accélérateur de prise et de durcissement selon l'une quelconque des revendications 1 à 11 dans un béton projeté ou un mortier projeté.
